# EUROPEAN PATENT SPECIFICATION

(11) **EP 3 403 823 B1**
(45) Date of publication and mention of the grant of the patent: **06.11.2019**
(21) Application number: 17020215.4
(22) Date of filing: 18.05.2017
(51) Int. Cl.: B32B 27/08, B32B 27/30, B32B 27/32, B32B 7/02

(54) **MULTILAYER FILM AND A METHOD FOR PRODUCING MULTILAYER FILM**
MEHRLAGIGER FILM UND VERFAHREN ZUR HERSTELLUNG DES MEHRLAGIGEN FILMS
FILM MULTICOUCHE ET PROCÉDÉ DE PRODUCTION DE FILM MULTICOUCHE

(43) Date of publication of application: 21.11.2018
(73) Proprietor: ERGIS S. A., 00-349 Warszawa (PL)
(72) Inventor: Lukomska, Agnieszka, 00-349 Warszawa (PL); Knor, Marek, 00-349 Warszawa (PL)
(74) Representative: Radlowski, Jakub

(56) References cited:
- WO-A1-2016/106123
- US-A1- 2003 211 298
- US-A1- 2011 274 901

## Description

The invention relates to multilayer stretch film and the method for producing the multilayer stretch film.

Stretch films are widely used in many areas of economy: in packaging, food, construction industry, in transport among others. Due to universal use of this type of products and the increasing production of stretch film, manufacturing technologies in this sector are also being developed. There are two basic methods for producing stretch film - the method of extrusion by air blast and the currently dominating method performed with the use of slit heads (the so called *"cast'* or "slit"). In the case of the slit method, the raw material is pre-plasticised in one or several extruders and then extruded at higher temperature by flat and narrow slit or slits, and having left the slits the film is stretched and cooled down on rotating rollers. The stretch films are commonly produced from polyolefins, including mostly copolymers of polyethylene of different density (e.g. linear LDPE, LLDPE, VLDPE, ULDPE), copolymers from metallocene catalysis, etc. The film of this type may include additives (e.g. polypropylene). Currently produced films consist usually of more than one layer and the layers may have different raw material composition. In practice they may consist of from several up to several dozen of layers. This allows the film to have better (compared to one-layer film) performance parameters, such as strength, impact resistance, stretchability, among others, while preserving relatively small thickness.

The Polish patent specification No. PL 223808(B1) entitled *"Polyolefin five-layer stretch type film"* reveals the stretch film consisting of five layers, consisting respectively of copolymer of ethylene with n-hexane, with MFR of 4.0 g/10 min; the mixture of the above-mentioned copolymer of ethylene with n-hexene and the copolymer of ethylene with n-hexene obtained in metallocene catalysis with 50/50% proportions; the mixture of the above-mentioned copolymer of ethylene with n-hexene with the mass percentage of 60% and with 40% of polypropylene with MFR of 5.0 g/10 min; and the mixture of 80% by mass of the above-mentioned copolymer of ethylene with n-hexene with 20% of copolymer of ethylene with n-hexene from the metallocene catalysis with MFR of 3.0 g/10 min.

Another Polish patent specification, No. PL 182545(B1), reveals the method for producing the multilayer polyethylene film, and the maximum number of layers is not defined. The method involves extrusion of the mixture of the linear low-density polyethylene (LLDPE) and the low-density polyethylene (LDPE) with specific mass proportion (LDPE accounts for 8-40% of the mixture) and feeding the extruded mixture to the rollers interacting in determined conditions.

The European patent specification No. EP 2799235 (A1) entitled *"Multilayer films"* reveals the multilayer stretch film consisting of many (from 6 to even 2000) 10-50µm layers consisting of linear low-density polyethylene (LDPE). In this document, it is optionally specified that LDPE may constitute the copolymer of ethylene with octene, may have density of 0.918 g/cm³, MFR of 3.7 or 4.0 g/10 min, it is also specified that the layers may consist of the same type of LDPE in each layer. In this case the improvement of properties of the stretch film would not result from combining (melting) layers of different composition, but from the very layering of the film.

And the Patent application entitled *"Stretch wrapping film"* published under number WO 2016094281(A1) reveals the multilayer stretch film with at least one layer composed of ionomer, which is the copolymer of ethylene and methacrylic acid (1-25%) and acrylic acid (1-99%). At least one of the remaining layers contains polyolefins and does not contain ionomers and preferably there is also a layer with adhesive properties (adhesive layer).

International patent application publish under the no. WO 2016/106123 entitled *"Multilayer heat-shrinkable film comprising a plurality of microlayers"* presents heat-shrinkable multilayer film made of blend of polymers, including polypropylene copolymer, having at least one bulk layer and at least one microlayer section comprising at least 10 microlayers, where each microlayer has at least half thickness of the bulk layer. Overall density of the heat shrinkable film according to said application is less or equal to 0,911 g/cc.

The state of the art includes a number of other solutions describing multilayer films and the methods for producing them. These solutions differ in the type of copolymers included in particular layers, MFR index, frequently they also contain additional ingredients. The main problem is to obtain the film with as small thickness as possible and, at the same time, to either maintain or improve its performance properties, including mostly the stretchability, adhesion, the maintained strength of the film after being stretched, and obtain the best possible dart impact resistance, etc. The final properties of the stretch film usually result from the synergy of layers which in the final product melt into each other. Hence, not only thickness, quantity and composition of layers are important, but also their proper sequence of distribution in the film.

As a result of numerous production tests, the stretch film with perfect performance properties has been developed, while maintaining small thickness and therefore providing considerable material savings.

According to the invention, the solution is the film consisting of at least 7 layers, with a central layer, 2 outer layers, 2 blocks of microlayers and at least 2 intermediate layers, where at least 1 layer of film consists of 50-99% of the copolymer propylene with ethylene with ethylene content ranging from 1-10%, mixed with other copolymer of propylene with ethylene, with ethylene content ranging from 3-20% or with elastomer. The main component is the linear low-density polyethylene with density ranging from 0.912 to 0.935 g/cm³ and the mass flow rate ranging from 0.5 to 10 g/10 min. (2.16 kg, 190°C), with the total percentage in the film composition ranging from 50 to 95%. Between the outer layers and the central layer, there are two blocks of layers with the percentage by volume compared to the volume of the entire film ranging from 10 to 60%, and each block of the layers is placed between core and one of the outer layer and consists of at least 10 microlayers with the thickness of less than 0.5 µm per each one, preferably less than 0.2 µm. The already mentioned blocks of thin layers may consist of both the layers with identical and different composition, and, additionally, they may be separated from both the central layer and the outer layers by at least one additional intermediate layer. At least one layer of the film (preferably the intermediate layer) contains LLDPE with density ranging from 0.912 to 0.935 g/cm³ and mass flow rate ranging from 0.5 to 10 g/10 min (190°C, 2.16 kg) in the amount of 50-90% and the polypropylene copolymer in the amount of 1-10% or elastomer. The polypropylene or elastomer added to the intermediate layer may come from the raw material which has been either materially recycled and recovered from offcuts, or other post-production waste of the stretch film.

The elastomer may be one of the following components: copolymer of ethylene and methyl acrylate; copolymer of ethylene and ethyl acrylate; copolymer of ethylene and butyl acrylate; block copolymer of hydrogenated isoprene and styrene; block copolymer of propylene and ethylene, copolymer of styrene and isoprene; copolymers of styrene and hydrogenated isoprene; terpolymer of styrene, hydrogenated isoprene and hydrogenated butadiene; terpolymer of ethylene, propylene and butene.

The total percentage of intermediate layers (between the central layer and outer layers) ranges from 50 to 80 % by volume of the entire film.

Preferably overall share of the blocks of microlayers constitutes 10-60% volume of the entire film.

One of the film layers may contain ultra low-density polyethylene (ULDPE) ranging from 0.880 to 0.910 g/cm³.

In turn, the linear low-density polyethylene (LLDPE) may be preferably the copolymer of ethylene with α-olefin (butene, octene or hexene) from synthesis on Ziegler-Natta-type catalyst, metallocene catalyst or post-metallocene catalyst with specific density ranging from 0.915 to 0.925 g/cm³ and the mass flow rate ranging from 2.5 to 5 g/10 min (2.16 kg, 190°C).

According to the invention, the film may contain at least one layer containing mixture of copolymer of polypropylene with ethylene and terpolymer-propylene with ethylene and butene, with the propylene percentage in the mixture ranging from 50 to 99%.

Any of the layers may contain mixture of copolymer of polypropylene with ethylene and the copolymer of polypropylene with α-olefin (e.g. butene, hexene, octene) with the propylene percentage ranging from 50 to 99%.

Regarding the outer layer, it preferably contains copolymer of propylene with α-olefin such as ethylene or butene. In another, advantageous variant of the solution, one of the outer layers comprises mixture of 40-99% of plastomer being α-olefin copolymer of ethylene (where α-olefin may be butene, hexene, octene) with specific density ranging from 0.860 to 0.910 g/cm³ (preferably 0.880-0.905 g/cm³) and the mass flow rate ranging from 0.5 to 10 g/10 min. (190°C, 2.16 kg) (preferably 4-8.5 g/10 min.) with α-olefin copolymer of LLDPE (where α-olefin may be butene, hexene, octene) with specific density ranging from 0.912 to 0.940 g/cm³ (preferably 0.912-0.920 g/cm³) and the mass flow rate ranging from 0.5 to 10 g/10 min. (190°C, 2.16 kg), preferably 2.5-5 g/10 min.

In another variant of the solution compliant with the invention, at least one of the outer layers comprises mixture of α-olefin copolymer of ultra low-density polyethylene (where α-olefin may be butene, hexene, octene) with specific density ranging from 0.880 to 0.910 g/cm³ (preferably 0.900-0.910 g/cm³) and the mass flow rate ranging from 0.5 to 10 g/10 min. (190 °C, 2.16 kg) (preferably 3-6 g/10 min.) with α-olefin copolymer of LLDPE (where α-olefin may be butene, hexene, octene) with specific density ranging from 0.912 to 0.940 g/cm³ (preferably 0.912-0.920 g/cm³) and the mass flow rate ranging from 0.5 to 10 g/10 min. (190 °C, 2.16 kg), preferably 2.5-5 g/10 min.

The opposite, outer layer preferably comprises mixture of α-olefin copolymer of ethylene (where α-olefin may be butene, hexene or octene) with specific density ranging from 0.925 to 0.960 g/cm³ and the mass flow rate ranging from 0.5 to 10 g/10 min. (190°C, 2.16 kg), preferably 2.5-5 g/10 min., with α-olefin copolymer of LLDPE (where α-olefin may be butene, hexene, octene) with specific density ranging from 0.912 to 0.925 g/cm³ and mass flow rate ranging from 0.5 to 10 g/10 min. (preferably 2-4 g/10 min.).

In the next variant of the solution, the intermediate layer may consist of 1-5 thinner alternate layers.

In the disclosed method for producing the multilayer film compliant with the invention, the film is produced by extruding linear low-density polyethylene LLDPE (0.912-0.935 g/cm³) and with mass flow rate ranging from 0.5 to 10 g/10 min. (190°C, 2.16 kg), with the percentage by volume ranging from 50 to 95%, and the copolymer of propylene containing 1-10% of ethylene, mixed with the copolymer of propylene with ethylene, with the ethylene content ranging from 3 to 20%, then these raw materials are extruded through the slit head at the temperature ranging from 260 to 300°C and stretched by cooling down the extruded film in a way that the film crystallization and solidification takes place 0.05-1 second after the material leaves the head.

The invention is applied in production of widely used multilayer stretch films, from the films used in the packaging industry to special construction and protective films. During the performed production tests with different proportions of copolymers of ethylene and propylene with different density and mass flow rate, the disclosed film showed unexpectedly very good performance properties, while preserving small thickness. In advantageous variants of the solution describing the composition of the outer layer, the film is also characterised by extremely good adhesion, desired for films used to protect different types of goods.

### Example 1.

In the example of executing the film in accordance with the invention, the film consists of 33 layers, and some of the layers differ when it comes to their composition. There are six different compositions of the film layers. The outer layer consists of 25% of the linear ultra low-density polyethylene (0.903 g/cm³) with mass flow index (MFI) of 8.2 g/10 min (190°C, 2.16 kg) and 74.5% of linear low-density copolymer of ethylene with n-butene (0.918 g/cm³) and MFI of 2.8 g/10 min. (190°C, 2.16 kg). The remaining 0.5% of the layer composition is the fluorine flow modifier. The percentage by volume of the layer in the entire film is 8%. The opposite outer layer consists of 99.5% of the copolymer of linear low-density polyethylene with n-butane (0.918 g/cm³) with MFI of 2.8 g/10 min (190°C, 2.16 kg). The percentage by volume of the layer in the entire film is 8%. The core of the film is the layer with the percentage by volume of 10% in the entire film, consisting of the mixture of 50% of the copolymer of polypropylene with ethylene and ethylene content of 5% and with density of 0.905 g/cm³ and mass flow index of 1.7 g/10 min (230°C, 2.16 kg) with another copolymer of propylene with ethylene, having ethylene content of 7.2% and density of 0.905 g/cm³ and the mass flow index of 8.2 g/10 min (230°C, 2.16 kg). Between the core layer and the outer layer, and between the core layer and the opposite outer layer there are 15 intermediate layers on each side of the core. 4 of them on each side of the core consist of the linear low-density polyethylene (0.918 g/cm³) and 3% of the additive of copolymer of propylene with ethylene, with density of 0.905 g/cm³ and the mass flow index of 1.7 g/10 min (230°C, 2.26 kg). 5 of them on each side of the core consist of the mixture of 80% linear low-density polyethylene (0.918 g/cm³) and mass flow rate of 4.5 g/10min (190°C, 2.16 kg) with 20% of the copolymer of propylene with ethylene with density of 0.902 g/cm³ and mass flow rate of 6.1 g/10 min (230°C, 2.16 kg). The remaining intermediate layers consist of the linear low-density polyethylene with density of 0.927 g/cm³ and mass flow are of 3.5 g/10 min (190°C, 2.16 kg), and the thickness of these layers is less than 0.2 µm.

### Example 2.

In another example of the execution of the film, like in example 1, the film has the core layer comprising 90% of the copolymer of polypropylene with ethylene, with density of 0.905 g/cm³ and mass flow index of 1.7 g/10 min (230°C, 2.16 kg) and 10% of the copolymer of ethylene and ethyl acrylate.

### Example 3.

In another example of the film's execution compliant with the invention, the film consists of 53 layers. There are five different compositions of the film layers. The outer layer consists of 25% of the linear ultra low-density polyethylene (0.903 g/cm³) with mass flow index (MFI) of 8.2 g/10 min (190°C, 2.16 kg) and 74.5% of linear low-density copolymer of ethylene with n-butene (0.918 g/cm³) and MFI of 2.8 g/10 min. (190°C, 2.16 kg). The remaining 0.5% of the layer composition is the fluorine flow modifier. The percentage by volume of the layer in the entire film is 9%. The opposite outer layer consists of 99.5% of the copolymer of linear low-density polyethylene with n-butane (0.918 g/cm³) with MFI of 2.8 g/10 min (190°C, 2.16 kg). The percentage by volume of the layer in the entire film is 9%. The core of the film is the layer with the percentage by volume of 9% in the entire film, consisting of the mixture of 50% of the copolymer of polypropylene with ethylene and ethylene content of 16% and with density of 0.889 g/cm³ and mass flow index of 3.7 g/10 min. (230°C, 2.16 kg) with another copolymer of propylene with ethylene, having ethylene content of 7.2% and density of 0.905 g/cm³ and the mass flow index of 8.2 g/10 min (230°C, 2.16 kg). Between the core layer and the outer layer, and between the core layer and the opposite outer layer there are 25 intermediate layers on each side of the core. 2 of them consist of linear low-density polyethylene (0.918 g/cm³) with MFI of 2.8 g/10 min on each side of the core. The remaining layers consist of the mixture of 95% of the linear low-density polyethylene (0.918 g/cm³) with mass flow rate of 4.5 g/10 min (190°C, 2.16 kg) with 5% of the copolymer of propylene with ethylene with density of 0.889 g/cm³ and mass flow rate of 3.7 g/10 min (230°C, 2.16 kg), and the thickness of these layers is less than 0.3 µm.

### Example 4.

The method for producing the multilayer film is characterised with the use of seven extruders, one of which contains the raw material in the form of the mixture of 40% of linear ultra low-density polyethylene (0.903 g/cm³) with mass flow index of 8.2 g/10 min (190°C, 2.16 kg) and 59.5% of the linear low-density copolymer of ethylene with n-butene (0.918 g/cm³) with mass flow index of 2.8 g/10 min (190°C, 2.16 kg). The next two extruders contain the raw material in the form of the linear low-density polyethylene (0.918 g/cm³) with mass flow index of 2.8 g/10 min (190°C, 2.16 kg). The next two extruders contain the same raw material as the previous two extruders with the addition of 2% of the copolymer of polypropylene with density of 0.905 g/cm³ and mass flow index of 1.7 g/10 min (230 °C, 2.26 kg). The sixth extruder contains the raw material in the form of the mixture of 80% of the copolymer of polypropylene with ethylene with density of 0.905 g/cm³ and mass flow index of 8.2 g/10 min (230 °C, 2.16 kg) with 20 % of another copolymer of propylene with ethylene, with density of 0.905 and mass flow rate of 1.7 g/10 min (230 °C, 2.16 kg). The seventh extruder contains a raw material in the form of the mixture of 60% of the copolymer of linear low-density polyethylene (0.918 g/cm³) with mass flow index of 2.8 g/10 min (190 °C, 2.16 kg) with 39.5% of the copolymer of linear low-density polyethylene (0.903 g/cm³) with mass flow index of 8.2 g/10 min. (190 °C, 2.16 kg). The raw material, preheated under high pressure, is fed from the extruders through a multi-application system to the slit head, where, at the temperature of 265 °C, the combined layers of the film are extruded and the thickness of individual layer is less than 10% of the volume of the entire film. The individual layers are extruded through a narrow slit onto the rotating, cooled roller, and then the combined layers comprising the pre-formed film are stretched by 5000 % compared to the original thickness of the film extruded from the slot, created from the combined layers, and at the same time the film is cooled down in such a manner that within approx. 2 seconds its temperature drops to 40 °C.

## Claims

1. Multilayer film with 50-95 % content of linear low-density polyethylene (LLDPE) of specific density ranging from 0.912 to 0.935 g/cm³ and the mass flow rate ranging from 0.5 to 10 g/10 min (190 °C, 2.16 kg) consisting of at least 7 layers, where at least one of the layers contains 50-99 % of copolymer of propylene with ethylene with the ethylene content of 1-10 % mixed with 1-50 % of other copolymer of propylene with ethylene with the ethylene content ranging from 3 to 20 % or with elastomer **characterised in that** at least one of the layers located between the central layer (the film core) and the outer layer contains the linear low-density polyethylene with specific density ranging from 0.912 to 0.935 g/cm³ and mass flow rate ranging from 0.5 to 10 g/10 min (190 °C, 2.16 kg) and copolymer of polypropylene or elastomer in the amount of 1-10%, and between the central layer and surface layers there are at least 2 intermediate layers of each side of the central layer and such intermediate layers represent 50-80% overall volume of the entire film, and 2 of intermediate layers are blocks of at least 10 microlayers with the thickness of less than 0.5 µm each.

2. The multilayer film, according to claim 1 is **characterised in that** at least one layer contains mixture of copolymer of polypropylene with ethylene and copolymer of polypropylene with α-olefin such as butene, hexene or octene, with the propylene mass percentage ranging from 50 to 99 %.

3. The multilayer film, according to one of the above-mentioned claims, is **characterised in that** at least one layer contains mixture of copolymer of polypropylene with ethylene and terpolymer of propylene with ethylene and butene where the mole percentage of propylene ranges from 50 to 99 %.

4. The multilayer film, according to one of the above-mentioned claims, is **characterised in that** the elastomer can be copolymer of ethylene and methyl acrylate, copolymer of ethylene and ethyl acrylate; copolymer of ethylene and butyl acrylate; block copolymer of hydrogenated isoprene and styrene; block copolymer of propylene and ethylene, copolymer of styrene and isoprene; copolymers of styrene and hydrogenated isoprene; terpolymer of styrene, hydrogenated isoprene and hydrogenated butadiene; terpolymer of ethylene, propylene and butene.

5. The multilayer film, according to one of the above-mentioned claims, is **characterised in that** one of the outer layers comprises mixture of 40-99 % of plastomer being α-olefin copolymer of ethylene (where α-olefin may be butene, hexene, octene) with specific density ranging from 0.860 to 0.910 g/cm³ (preferably 0.880-0.905 g/cm³) and the mass flow rate ranging from 0.5 to 10 g/10 min. (190 °C, 2.16 kg), preferably 4-8.5 g/10 min. with α-olefin copolymer of LLDPE (where α-olefin may be butene, hexene, octene) with specific density ranging from 0.912 to 0.940 g/cm³ (preferably 0.912-0.920 g/cm³) and mass flow rate ranging from 0.5 to 10 g/10 min. (190°C, 2.16 kg), preferably 2.5-5 g/10 min.

6. The multilayer film, according to one of the above-mentioned claims, is **characterised in that** one of the outer layers comprises mixture of α-olefin copolymer of linear ultra low density polyethylene (ULDPE) (where α-olefin may be hexene, octene) with specific density ranging from 0.880 to 0.910 g/cm³ (preferably 0.9-0.91 g/cm³) and mass flow rate ranging from 0.5 to 10 g/10 min. (190°C, 2.16 kg), preferably 3-6 g/10 min. with α-olefin copolymer of LLDPE (where α-olefin may be butene, hexene, octene) with specific density ranging from 0.912 to 0.940 g/cm³ (preferably 0.912-0.920 g/cm³) and mass flow rate ranging from 0.5 to 10 g/10 min. (190 °C, 2.16 kg), preferably 2.5-5 g/10 min.

7. The multilayer film, according to one of the above-mentioned claims, is **characterised in that** one of the outer layers comprises mixture of α-olefin copolymer of ethylene (where α-olefin may be butene, hexene, octene) with specific density ranging from 0.925 to 0.960 g/cm³ and the mass flow rate ranging from 0.5 to 10 g/10 min. (190 °C, 2.16 kg), preferably 2.5-5 g/10 min., with α-olefin copolymer of LLDPE (where α-olefin may be butene, hexene, octene) with specific density ranging from 0.912 to 0.925 g/cm³ and mass flow rate ranging from 0.5 to 10 g/10 min. (preferably 2-4 g/10 min.).

8. The multilayer film, according to one of the above-mentioned claims, is **characterised in that** the blocks of microlayers consist of at least 10 alternate thin layers with the thickness of less than 0.2 µm each microlayer.

9. The multilayer film according to one of the above-mentioned claims, is **characterised in that** the volume percentage of both blocks of thin layers ranges from 10 to 60 % of the entire film volume.

10. The multilayer film, according to any of claims 1 - 9, is **characterised in that** the polypropylene or elastomer added to the intermediate layer may come from the raw material which has been materially recycled.

11. The method for producing the multilayer film containing from 50 to 95 % of the linear low-density polyethylene (LLDPE) consisting of at least 7 layers with specific density ranging from 0.912 to 0.935 g/cm³ and mass flow rate ranging from 0.5 to 10 g/10 min (190°C, 2.16 kg) when at least one layer consists linear low-density polyethylene LLDPE (0.915-0.925 g/cm³) with mass flow rate ranging from 2 to 5 g/10 min. (190 C, 2.16 kg), with the percentage by volume ranging from 50 to 95 %, with mixture of copolymer of propylene with ethylene, containing 1-10% of ethylene mixed with other copolymer of propylene with ethylene, with ethylene content ranging from 3 to 20 % or with elastomer, such as; copolymer of ethylene and methyl acrylate; copolymer of ethylene and ethyl acrylate; copolymer of ethylene and butyl acrylate; block copolymer of hydrogenated isoprene and styrene; block copolymer of propylene and ethylene, copolymer of styrene and isoprene; copolymers of styrene and hydrogenated isoprene; terpolymer of styrene, hydrogenated isoprene and hydrogenated butadiene; terpolymer of ethylene, propylene and butene **characterised in that** these components are extruded through the slit head at the temperature ranging from 260 to 300°C and stretched by simultaneously cooling down the extruded film so that the film crystallization and solidification takes place after 0.05-1 second, and the film extruded through the slit heat is formed in layers so that between the core layer and surface layers there are intermediate layers situated on both sides of the core layer that form 50-80% of the entire film volume and where 2 of these intermediate layers are blocks of microlayers each of them having at least 10 microlayers with the thickness of less than 0.5 µm

12. The method for producing the multilayer film, according to claim 11, is **characterised in that** at least 1 layer of the film extruded with the use of the slit head contains mixture of copolymer of polypropylene with ethylene and copolymer of polypropylene with α-olefin such as butene, hexene or octene, with the propylene percentage ranging from 50 to 99 %.

13. The method for producing the multilayer film, according to claims 11 or 12, is **characterised in that** at least one layer of the film extruded with the use of the slit head contains mixture of copolymer of polypropylene with ethylene and terpolymer of propylene with ethylene and butene where the mole percentage of propylene ranges from 50 to 99%.

14. The method for producing the multilayer film, according to claims 11, 12 or 13, is **characterised in that** at least one layer of the film extruded with the use of the slit head contains mixture of 40-99% of plastomer being α-olefin copolymer of ethylene (where α-olefin may be butene, hexene, octene) with the specific density ranging from 0.860 to 0.910 g/cm³ (preferably 0.880-0.905 g/cm³) and the mass flow rate ranging from 0.5 to 10 g/10 min. (190 °C, 2.16 kg), preferably 4-8.5 g/10 min. with α-olefin copolymer of LLDPE (where α-olefin may be butene, hexene, octene) with specific density ranging from 0.912 to 0.940 g/cm³ (preferably 0.912-0.920 g/cm³) and mass flow rate ranging from 0.5 to 10 g/10 min. (190°C, 2.16 kg), preferably 2.5-5 g/10 min.

15. The method for producing the multilayer film, according to one of claims 11-14, is **characterised in that** to the extruder, from which the material used to produce at least one of the outer layers comes, the following is added: mixture of α-olefin copolymer of linear ultra low-density polyethylene (ULDPE) (where α-olefin may be hexene, octene) with specific density ranging from 0.880 to 0.910 g/cm³ (preferably 0.9-0.91 g/cm³) and mass flow rate ranging from 0.5 to 10 g/10 min. (190°C, 2.16 kg), preferably 3 - 6 g/10 min. with α-olefin copolymer of LLDPE (where α-olefin may be butene, hexene, octene) with specific density ranging from 0.912 to 0.940 g/cm³ (preferably 0.912-0.920 g/cm³) and mass flow rate ranging from 0.5 to 10 g/10 min. (190°C, 2.16 kg), preferably 2.5-5 g/10 min.

16. The method for producing the multilayer film, according to one of claims 11-15, is **characterised in that** to the extruder, from which the material used to produce at least one of the outer layers comes, the following is added: mixture of α-olefin copolymer of ethylene (where α-olefin may be butene, hexene or octene) with specific density ranging from 0.925 to 0.960 g/cm³ and mass flow rate ranging from 0.5 to 10 g/10 min. (190°C, 2.16 kg), preferably 2.5 - 5 g/10 min., with α-olefin copolymer of LLDPE (where α-olefin may be butene, hexene, octene) with specific density ranging from 0.912 to 0.925 g/cm³ and mass flow rate ranging from 0.5 to 10 g/10 min. (preferably 2-4 g/10 min.).

17. The method for producing the multilayer film, according to one of claims 11-16, is **characterised in that** the two blocks of thin layers shaped by slit head are made of microlayers with the thickness less than 0.2 µm each.

18. The method for producing multilayer film, according to claims 11-17, is **characterised in that** the polypropylene or elastomer that comes from a materially recycled raw material is added to at least one intermediate layer.

## Patentansprüche

1. Mehrschichtfolie mit 50 - 95 % Gehalt an linearem Polyethylen niedriger Dichte (LLDPE) mit einer spezifischen Dichte von 0,912 bis 0,935 g/cm³ und einem Massendurchsatz von 0,5 bis 10 g/10 min (190 °C, 2,16 kg), die aus mindestens 7 Schichten besteht, wobei zumindest eine der Schichten 50 - 99 % Propylen-Copolymer mit Ethylen mit einem Ethylengehalt von 1 - 10 % gemischt mit 1 - 50 % anderem Propylen-Copolymer mit Ethylen mit einem Ethylengehalt von 3 - 20 % oder mit Elastomer enthält, **dadurch gekennzeichnet, dass** zumindest eine der Schichten, die sich zwischen der Mittelschicht (dem Folienkern) und der Außenschicht befindet, das lineare Polyethylen niedriger Dichte mit einer spezifischen Dichte von 0,912 bis 0,935 g/cm³ und einem Massendurchsatz im Bereich von 0,5 bis 10 g/10 min (190 °C, 2,16 kg) und einem Copolymer aus Polypropylen oder Elastomer in Höhe von 1 - 10 % enthält, und zwischen der Mittelschicht und den Oberflächenschichten sich zumindest 2 Zwischenschichten beidseitig der Mittelschicht befinden und diese Zwischenschichten 50 - 80 % des Gesamtvolumens der gesamten Folie darstellen, und 2 der Zwischenschichten Blöcke von zumindest 10 Mikroschichten mit einer Dicke von jeweils weniger als 0,5 µm sind.

2. Mehrschichtfolie nach Anspruch 1, **dadurch gekennzeichnet, dass** zumindest eine Schicht eine Mischung aus Propylen-Copolymer mit Ethylen und Polypropylen-Copolymer mit α-Olefin wie Buten, Hexen oder Octen enthält, wobei der Propylen-Massenanteil zwischen 50 und 99 % beträgt.

3. Mehrschichtfolie nach einem beliebigen der vorstehenden Ansprüche, **dadurch gekennzeichnet, dass** zumindest eine Schicht eine Mischung aus Polypropylen-Copolymer mit Ethylen und Propylen-Terpolymer mit Ethylen und Buten enthält, wobei der Molanteil zwischen 50 und 99 % beträgt.

4. Mehrschichtfolie nach einem beliebigen der vorstehenden Ansprüche, **dadurch gekennzeichnet, dass** das Elastomer Ethylen-Copolymer und Methylacrylat sein kann, Ethylen-Copolymer und Ethylacrylat; Ethylen-Copolymer und Butylacrylat; ein Block-Copolymer aus hydriertem Isopren und Styrol; ein Block-Copolymer aus Propylen und Ethylen, ein Copolymer aus Styrol und Isopren; Copolymere aus Styrol und hydriertem Isopren; Terpolymer aus Styrol, hydriertem Isopren und hydriertem Butadien; Terpolymer aus Ethylen, Propylen und Buten.

5. Mehrschichtfolie nach einem beliebigen der vorstehenden Ansprüche, **dadurch gekennzeichnet, dass** eine der äußeren Schichten eine Mischung aus 40 - 99 % Plastomer umfasst, das α-Olefin-Ethylen-Copolymer ist, (wobei α-Olefin Buten, Hexen, Okten sein kann) mit einer spezifischen Dichte im Bereich von 0,860 bis 0,910 g/cm³ (vorzugsweise 0,880 - 0,905 g/cm³) und einem Massendurchsatz im Bereich von 0,5 bis 10 g/10 min (190 °C, 2,16 kg), vorzugsweise 4 - 8,5 g/10 min mit α-Olefin-Copolymer aus LLDPE, (wobei α-Olefin Buten, Hexen, Octen sein kann) mit einer spezifischen Dichte im Bereich von 0,912 bis 0,940 g/cm³ (vorzugsweise 0,912 - 0,920 g/cm³) und einem Massendurchsatz im Bereich von 0,5 bis 10 g/10 min (190 °C, 2,16 kg), vorzugsweise 2,5 - 5 g/10 min.

6. Mehrschichtfolie nach einem beliebigen der vorstehenden Ansprüche, **dadurch gekennzeichnet, dass** eine der äußeren Schichten eine Mischung aus α-Olefin-Copolymer aus linearem Polyethylen ultra-niedriger Dichte (ULDPE) umfasst, (wobei α-Olefin Hexen, Octen sein kann) mit einer spezifischen Dichte im Bereich von 0,880 bis 0,910 g/cm³ (vorzugsweise 0,9 - 0,91 g/cm³) und einem Massendurchsatz im Bereich von 0,5 bis 10 g/10 min (190 °C, 2,16 kg), vorzugsweise 3 - 6 g/10 min mit α-Olefin-Copolymer aus LLDPE, (wobei α-Olefin Buten, Hexen, Octen sein kann) mit einer spezifischen Dichte im Bereich von 0,912 bis 0,940 g/cm³ (vorzugsweise 0,912 - 0,920 g/cm³) und einem Massendurchsatz im Bereich von 0,5 bis 10 g/10 min. (190 °C, 2,16 kg), vorzugsweise 2,5 - 5 g/10 min.

7. Mehrschichtfolie nach einem beliebigen der vorstehenden Ansprüche, **dadurch gekennzeichnet, dass** eine der äußeren Schichten eine Mischung aus α-Olefin-Ethylen-Copolymer umfasst, (wobei α-Olefin Buten, Hexen, Octen sein kann) mit einer spezifischen Dichte im Bereich von 0,925 bis 0,960 g/cm³ und einem Massendurchsatz im Bereich von 0,5 bis 10 g/10 min (190 °C, 2,16 kg), vorzugsweise 2,5 - 5 g/10 min, mit α-Olefin-Copolymer aus LLDPE (wobei α-Olefin Buten, Hexen, Octen sein kann) mit einer spezifischen Dichte im Bereich von 0,912 bis 0,925 g/cm³ und einem Massendurchsatz im Bereich von 0,5 bis 10 g/10 min (vorzugsweise 2 - 4 g/10 min).

8. Mehrschichtfolie nach einem beliebigen der vorstehenden Ansprüche, **dadurch gekennzeichnet, dass** die Blöcke aus Mikroschichten aus zumindest 10 abwechselnden dünnen Schichten mit einer Dicke von weniger als 0,2 µm pro Mikroschicht bestehen.

9. Mehrschichtfolie nach einem beliebigen der vorstehenden Ansprüche, **dadurch gekennzeichnet, dass** der Volumenanteil beider Blöcke aus dünnen Schichten im Bereich von 10 bis 60 % des gesamten Folienvolumens liegt.

10. Mehrschichtfolie nach einem beliebigen der vorstehenden Ansprüche 1 - 9, **dadurch gekennzeichnet, dass** das zur Zwischenschicht zugefügte Polypropylen oder Elastomer aus dem Rohstoff stammen kann, der stofflich recycelt wurde.

11. Verfahren zur Herstellung der Mehrschichtfolie, die 50 bis 95 % an linearem Polyethylen niedriger Dichte (LLDPE) enthält, bestehend aus zumindest 7 Schichten mit einer spezifischen Dichte im Bereich von 0,912 bis 0,935 g/cm³ und einem Massendurchsatz im Bereich von 0,5 bis 10 g/10 min (190 °C, 2,16 kg), wenn zumindest eine Schicht aus linearem Polyethylen niedriger Dichte (LLDPE) (0,915 - 0,925 g/cm³) mit einem Massendurchsatz im Bereich von 2 bis 5 g/10 min (190 °C, 2.16 kg) besteht, wobei der Volumenprozentsatz im Bereich von 50 bis 95 % liegt, mit einer Mischung aus Propylen-Copolymer mit Ethylen, das 1 bis 10 % Ethylen enthält, das mit einem anderen Propylen-Copolymer mit Ethylen gemischt ist, mit einem Ethylengehalt im Bereich von 3 bis 20 % oder mit einem Elastomer, wie beispielsweise einem Ethylen-Copolymer und Methylacrylat, einem Ethylen-Copolymer und Ethylacrylat, einem Ethylen-Copolymer und Butylacrylat, einem Block-Copolymer aus hydriertem Isopren und Styrol; Block-Copolymer aus Propylen und Ethylen, Copolymer aus Styrol und Isopren; Copolymere aus Styrol und hydriertem Isopren; Terpolymer aus Styrol, hydriertem Isopren und hydriertem Butadien; Terpolymer aus Ethylen, Propylen und Buten, **dadurch gekennzeichnet, dass** diese Komponenten bei einer Temperatur im Bereich von 260 bis 300 °C durch den Schlitzkopf extrudiert und durch gleichzeitiges Abkühlen der extrudierten Folie gestreckt werden, so dass die Folienkristallisierung und Verfestigung nach 0,05 - 1 Sekunde erfolgt, und die durch den Schlitzkopf extrudierte Folie in Schichten gebildet wird, so dass sich zwischen der Kernschicht und den Oberflächenschichten beidseitig der Kernschicht Zwischenschichten befinden, die 50 - 80 % des gesamten Folienvolumens bilden, und wobei 2 dieser Zwischenschichten Blöcke von Mikroschichten sind, die jeweils zumindest 10 Mikroschichten mit einer Dicke von weniger als 0,5 µm aufweisen.

12. Verfahren zur Herstellung der Mehrschichtfolie nach Anspruch 11, **dadurch gekennzeichnet, dass** zumindest eine Schicht der unter Verwendung des Schlitzkopfes extrudierten Folie eine Mischung aus einem Polypropylen-Copolymer mit Ethylen und einem Polypropylen-Copolymer mit α-Olefin wie Buten, Hexen oder Okten enthält, wobei der Propylenanteil zwischen 50 und 99 % liegt.

13. Verfahren zur Herstellung der Mehrschichtfolie nach einem beliebigen der vorstehenden Ansprüche 11 oder 12, **dadurch gekennzeichnet, dass** zumindest eine Schicht der unter Verwendung des Schlitzkopfes extrudierten Folie eine Mischung aus einem Polypropylen-Copolymer mit Ethylen und einem Terpolymer aus Propylen mit Ethylen und Buten enthält, wobei der Molanteil an Propylen im Bereich von 50 bis 99 % liegt.

14. Verfahren zur Herstellung der Mehrschichtfolie nach einem beliebigen der vorstehenden Ansprüche 11, 12 oder 13, **dadurch gekennzeichnet, dass** zumindest eine Schicht der unter Verwendung des Schlitzkopfes extrudierten Folie eine Mischung aus 40 - 99 % Plastomer enthält, das α-Olefin-Copolymer aus Ethylen ist (wobei α-Olefin Buten, Hexen, Octen sein kann) mit einer spezifischen Dichte im Bereich von 0,860 bis 0,910 g/cm³) (vorzugsweise 0,880 - 0,905 g/cm³) und einem Massendurchsatz im Bereich von 0,5 bis 10 g/10 min (190 °C, 2,16 kg), vorzugsweise 4 - 8,5 g/10 min mit α-Olefin-Copolymer aus LLDPE (wobei α-Olefin Buten, Hexen, Octen sein kann) mit einer spezifischen Dichte im Bereich von 0,912 bis 0,940 g/cm³) (vorzugsweise 0,912-0,920 g/cm³) und einem Massendurchsatz im Bereich von 0,5 bis 10 g/10 min (190 °C, 2,16 kg), vorzugsweise 2,5 - 5 g/10 min.

15. Verfahren zur Herstellung der Mehrschichtfolie nach einem beliebigen der vorstehenden Ansprüche 11 - 14, **dadurch gekennzeichnet, dass** dem Extruder, aus dem das Material zur Herstellung zumindest einer der Außenschichten austritt, folgendes zugegeben wird: Mischung aus α-Olefin-Copolymer aus linearem Polyethylen ultra-niedriger Dichte (ULDPE), (wobei α-Olefin Hexen, Octen sein kann) mit einer spezifischen Dichte im Bereich von 0,880 bis 0,910 g/cm³ (vorzugsweise 0,9 - 0,91 g/cm³) und einem Massendurchsatz im Bereich von 0,5 bis 10 g/10 min (190 °C, 2,16 kg), vorzugsweise 3 - 6 g/10 min mit α-Olefin-Copolymer aus LLDPE (wobei α-Olefin Buten, Hexen, Octen sein kann) mit einer spezifischen Dichte im Bereich von 0,912 bis 0,940 g/cm³ (vorzugsweise 0,912 - 0,920 g/cm³) und einem Massendurchsatz im Bereich von 0,5 bis 10 g/10 min (190 °C, 2,16 kg), vorzugsweise 2,5 - 5 g/10 min.

16. Verfahren zur Herstellung der Mehrschichtfolie nach einem beliebigen der vorstehenden Ansprüche 11 - 15, **dadurch gekennzeichnet, dass** dem Extruder, aus dem das Material zur Herstellung zumindest einer der Außenschichten austritt, folgendes zugegeben wird: Mischung aus α-Olefin-Copolymer aus Ethylen (wobei α-Olefin Buten, Hexen oder Octen sein kann) mit einer spezifischen Dichte im Bereich von 0,925 bis 0,960 g/cm³ und einem Massendurchsatz im Bereich von 0,5 bis 10 g/10 min (190 °C, 2,16 kg), vorzugsweise 2,5 - 5 g/10 min mit α-Olefin-Copolymer aus LLDPE (wobei α-Olefin Buten, Hexen, Octen sein kann) mit einer spezifischen Dichte im Bereich von 0,912 bis 0,925 g/cm³ und einem Massendurchsatz im Bereich von 0,5 bis 10 g/10 min (vorzugsweise 2 - 4 g/10 min).

17. Verfahren zur Herstellung der Mehrschichtfolie nach einem beliebigen der vorstehenden Ansprüche 11 - 16, **dadurch gekennzeichnet, dass** die beiden Blöcke dünner Schichten, die durch einen Schlitzkopf geformt sind, aus Mikroschichten mit einer Dicke von jeweils weniger als 0,2 µm bestehen.

18. Verfahren zur Herstellung von Mehrschichtfolie nach einem beliebigen der vorstehenden Ansprüche 11 - 17, **dadurch gekennzeichnet, dass** das Polypropylen oder Elastomer, das aus einem stofflich recycelten Rohstoff stammt, in zumindest eine Zwischenschicht eingebracht wird.

## Revendications

1. Film multicouche contenant 50 à 95 % de polyéthylène linéaire à basse densité (PELBD) ayant une densité allant de 0,912 à 0,935 g/cm³ et dont le débit massique va de 0,5 à 10 g/10 min (190 °C, 2,16 kg) constitué d'au moins 7 couches, dont au moins une couche contient 50 à 99 % de copolymère de propylène et d'éthylène ayant une teneur en éthylène de 1 à 10 % mélangé avec 1 à 50 % d'un autre copolymère de propylène et d'éthylène ayant une teneur en éthylène allant de 3 à 20 % ou avec un élastomère, **caractérisé en ce qu'**au moins l'une des couches situées entre la couche centrale (le cœur du film) et la couche extérieure contient le polyéthylène linéaire à basse densité ayant une densité allant de 0,912 à 0,935 g/cm³ et un débit massique allant de 0,5 à 10 g/10 min (190 °C, 2,16 kg) et un copolymère de polypropylène ou l'élastomère, à raison de 1 à 10%, et entre la couche centrale et les couches superficielles, il y a au moins 2 couches intermédiaires de chaque côté de la couche centrale et ces couches intermédiaires représentent 50 à 80 % du volume total du film entier, et 2 des couches intermédiaires sont des blocs d'au moins 10 microcouches faisant chacune moins de 0,5 µm d'épaisseur.

2. Film multicouche selon la revendication 1, **caractérisé en ce qu'**au moins une couche contient un mélange de copolymère de polypropylène et d'éthylène et d'un copolymère de polypropylène et d'une α-oléfine telle que le butène, l'hexène ou l'octène, le pourcentage en masse de propylène allant de 50 à 99 %.

3. Film multicouche selon l'une quelconque des revendications précédentes, **caractérisé en ce qu'**au moins une couche contient un mélange de copolymère de polypropylène et d'éthylène et de terpolymère de propylène, d'éthylène et de butène, dans lequel le pourcentage molaire de propylène va de 50 à 99 %.

4. Film multicouche selon l'une quelconque des revendications précédentes, **caractérisé en ce que** l'élastomère peut être un copolymère d'éthylène et d'acrylate de méthyle ; un copolymère d'éthylène et d'acrylate d'éthyle ; un copolymère d'éthylène et d'acrylate de butyle ; un copolymère séquencé d'isoprène hydrogéné et de styrène ; un copolymère séquencé de propylène et d'éthylène ; un copolymère de styrène et d'isoprène ; des copolymères de styrène et d'isoprène hydrogéné ; un terpolymère de styrène, d'isoprène hydrogéné et de butadiène hydrogéné ; un terpolymère d'éthylène, de propylène et de butène.

5. Film multicouche selon l'une quelconque des revendications précédentes, **caractérisé en ce que** l'une des couches extérieures comprend un mélange de 40 à 99 % de plastomère qui est un copolymère d'éthylène/a-oléfine (dans lequel l'a-oléfine peut être le butène, l'hexène ou l'octène) ayant une densité allant de 0,860 à 0,910 g/cm³ (de préférence de 0,880 à 0,905 g/cm³) et un débit massique allant de 0,5 à 10 g/10 min (190 °C, 2,16 kg), de préférence de 4 à 8,5 g/10 min avec un copolymère de PELBD/α-oléfine (dans lequel l'a-oléfine peut être le butène, l'hexène ou l'octène) ayant une densité allant de 0,912 à 0,940 g/cm³ (de préférence de 0,912 à 0,920 g/cm³) et un débit massique allant de 0,5 à 10 g/10 min (190 °C, 2,16 kg), de préférence de 2,5 à 5 g/10 min.

6. Film multicouche selon l'une quelconque des revendications précédentes, **caractérisé en ce que** l'une des couches extérieures comprend un mélange de copolymère de polyéthylène linéaire à ultra basse densité (ULDPE)/α-oléfine (dans lequel l'α-oléfine peut être l'hexène ou l'octène) ayant une densité allant de 0,880 à 0,910 g/cm³ (de préférence de 0,9 à 0,91 g/cm³) et un débit massique allant de 0,5 à 10 g/10 min (190 °C, 2,16 kg), de préférence de 3 à 6 g/10 min avec un copolymère de PELBD/α-oléfine (dans lequel l'a-oléfine peut être le butène, l'hexène ou l'octène) ayant une densité allant de 0,912 à 0,940 g/cm³ (de préférence de 0,912 à 0,920 g/cm³) et un débit massique allant de 0,5 à 10 g/10 min (190 °C, 2,16 kg), de préférence de 2,5 à 5 g/10 min.

7. Film multicouche selon l'une quelconque des revendications précédentes, **caractérisé en ce que** l'une des couches extérieures comprend un mélange d'un copolymère d'éthylène/α-oléfine (dans lequel l'a-oléfine peut être le butène, l'hexène ou l'octène) ayant une densité allant de 0,925 à 0,960 g/cm³ et le débit massique allant de 0,5 à 10 g/10 min (190 °C, 2,16 kg), de préférence de 2,5 à 5 g/10 min, avec un copolymère de PELBD/α-oléfine (dans lequel l'α-oléfine peut être le butène, l'hexène ou l'octène) ayant une densité allant de 0,912 à 0,925 g/cm³ et un débit massique allant de 0,5 à 10 g/10 min (de préférence de 2 à 4 g/10 min).

8. Film multicouche selon l'une quelconque des revendications précédentes, **caractérisé en ce que** les blocs de microcouches sont constitués d'au moins 10 couches minces alternées avec une épaisseur inférieure à 0,2 µm pour chaque microcouche.

9. Film multicouche selon l'une quelconque des revendications précédentes, **caractérisé en ce que** le pourcentage en volume des deux blocs de couches minces va de 10 à 60 % du volume total du film.

10. Film multicouche selon l'une quelconque des revendications 1 à 9, **caractérisé en ce que** le polypropylène ou l'élastomère ajouté à la couche intermédiaire peut provenir de la matière première qui a été matériellement recyclée.

11. Procédé de production du film multicouche contenant de 50 à 95 % de polyéthylène linéaire à basse densité (PELBD) constitué d'au moins 7 couches ayant une densité allant de 0,912 à 0,935 g/cm³ et un débit massique allant de 0,5 à 10 g/10 min (190 °C, 2,16 kg) quand au moins une couche est constituée de polyéthylène linéaire à basse densité PELBD (0,915-0,925 g/cm³) ayant un débit massique allant de 2 à 5 g/10 min (190 C, 2,16 kg), ayant un pourcentage en volume allant de 50 à 95 %, avec un mélange de copolymère de propylène et d'éthylène, contenant 1 à 10 % d'éthylène mélangé avec un autre copolymère de propylène et d'éthylène, ayant une teneur en éthylène allant de 3 à 20 % ou avec un élastomère tel qu'un copolymère d'éthylène et d'acrylate de méthyle ; un copolymère d'éthylène et d'acrylate d'éthyle ; un copolymère d'éthylène et d'acrylate de butyle ; un copolymère séquencé d'isoprène hydrogéné et de styrène ; un copolymère séquencé de propylène et d'éthylène ; un copolymère de styrène et d'isoprène ; des copolymères de styrène et d'isoprène hydrogéné ; un terpolymère de styrène, d'isoprène hydrogéné et de butadiène hydrogéné ; un terpolymère d'éthylène, de propylène et de butène **caractérisé en ce que** ces composants sont extrudés à travers la tête fendue à une température allant de 260 à 300 °C et étirés en refroidissant simultanément le film extrudé de telle sorte que la cristallisation et la solidification du film se déroulent après 0,05 à 1 seconde, et le film extrudé à travers la tête fendue est formé en couches de telle sorte que, entre la couche centrale et les couches superficielles, se trouvent des couches intermédiaires situées de part et d'autre de la couche centrale qui forment 50 à 80 % du volume total du film et où 2 de ces couches intermédiaires sont des blocs de microcouches ayant chacun au moins 10 microcouches d'une épaisseur inférieure à 0,5 µm.

12. Procédé de production du film multicouche selon la revendication 11, **caractérisé en ce qu'**au moins 1 couche du film extrudé en utilisant la tête fendue contient un mélange de copolymère de polypropylène et d'éthylène et de copolymère de polypropylène et d'a-oléfine telle que le butène, l'hexène ou l'octène, le pourcentage de propylène allant de 50 à 99 %.

13. Procédé de production du film multicouche selon les revendications 11 ou 12, **caractérisé en ce qu'**au moins l'une des couches du film extrudé en utilisant la tête fendue contient un mélange de copolymère de polypropylène et d'éthylène et de terpolymère de propylène, d'éthylène et de butène dans lequel le pourcentage molaire de propylène va de 50 à 99 %.

14. Procédé de production du film multicouche selon les revendications 11, 12 ou 13, **caractérisé en ce qu'**au moins une couche du film extrudé en utilisant la tête fendue comprend un mélange de 40 à 99 % de plastomère qui est un copolymère d'éthylène/a-oléfine (dans lequel l'α-oléfine peut être le butène, l'hexène ou l'octène) ayant une densité allant de 0,860 à 0,910 g/cm³ (de préférence de 0,880 à 0,905 g/cm³) et un débit massique allant de 0,5 à 10 g/10 min (190 °C, 2,16 kg), de préférence de 4 à 8,5 g/10 min avec un copolymère de PELBD/α-oléfine (dans lequel l'a-oléfine peut être le butène, l'hexène ou l'octène) ayant une densité allant de 0,912 à 0,940 g/cm³ (de préférence de 0,912 à 0,920 g/cm³) et un débit massique allant de 0,5 à 10 g/10 min (190 °C, 2,16 kg), de préférence de 2,5 à 5 g/10 min.

15. Procédé de production du film multicouche selon l'une quelconque des revendications 11 à 14, **caractérisé en ce que** ce qui suit est ajouté à l'extrudeuse de laquelle provient le matériau utilisé pour produire au moins l'une des couches extérieures, à savoir un mélange de copolymère de polyéthylène à ultra basse densité (ULDPE)/α-oléfine (dans lequel l'a-oléfine peut être l'hexène ou l'octène) ayant une densité allant de 0,880 à 0,910 g/cm³ (de préférence de 0,9 à 0,91 g/cm³) et un débit massique allant de 0,5 à 10 g/10 min (190 °C, 2,16 kg), de préférence de 3 à 6 g/10 min avec un copolymère de PELBD/α-oléfine (dans lequel l'a-oléfine peut être le butène, l'hexène ou l'octène) ayant une densité allant de 0,912 à 0,940 g/cm³ (de préférence de 0,912 à 0,920 g/cm³) et un débit massique allant de 0,5 à 10 g/10 min (190 °C, 2,16 kg), de préférence de 2,5 à 5 g/10 min.

16. Procédé de production du film multicouche selon l'une quelconque des revendications 11 à 15, **caractérisé en ce que** ce qui suit est ajouté à l'extrudeuse de laquelle provient le matériau utilisé pour produire au moins l'une des couches extérieures, à savoir un mélange de copolymère d'éthylène/a-oléfine (dans lequel l'a-oléfine peut être le butène, l'hexène ou l'octène) ayant une densité allant de 0,925 à 0,960 g/cm³ et un débit massique allant de 0,5 à 10 g/10 min (190 °C, 2,16 kg), de préférence de 2,5 à 5 g/10 min, avec un copolymère de PELBD/α-oléfine (dans lequel l'α-oléfine peut être le butène, l'hexène ou l'octène) ayant une densité allant de 0,912 à 0,925 g/cm³ et un débit massique allant de 0,5 à 10 g/10 min (de préférence de 2 à 4 g/10 min).

17. Procédé de production du film multicouche selon l'une quelconque des revendications 11 à 16, **caractérisé en ce que** les deux blocs de couches minces mis en forme par la tête fendue sont constitués de microcouches d'une épaisseur inférieure à 0,2 µm chacune.

18. Procédé de production du film multicouche selon les revendications 11 à 17, **caractérisé en ce que** le polypropylène ou l'élastomère qui provient d'une matière première matériellement recyclée est ajouté à au moins une couche intermédiaire.
